# EUROPEAN PATENT APPLICATION

(11) **EP 2 629 253 A1**
(43) Date of publication of application: **21.08.2013**
(21) Application number: 13155502.1
(22) Date of filing: 15.02.2013
(51) Int. Cl.: G06Q 10/08, G06Q 10/10, G07B 11/00, G07B 15/00

(54) **Method and system for verifying scannable codes, and code for use therein**

(30) Priority: 15.02.2012 NL 2008296
(71) Applicant: Appvantages B.V., 2312 RT Leiden (NL)
(72) Inventor: Kramer, Selwyn Christoph, 3523 CS Utrecht (NL)
(74) Representative: van Oeffelt, Abraham

(57) **Abstract**

The present invention relates to a method for verifying scannable codes, comprising the steps of issuing a plurality of scannable codes, each code corresponding with unique assets, such as an entrance, a coupon, a voucher or a discount, arranging a plurality of scanners for the codes, interconnecting the scanners by means of a data-communication-network, scanning codes, each by one of the scanners, comparing each scanned code with previously scanned codes in a database, and if the code is already present in the database more than a predetermined number of times, refusing the code, and otherwise accepting the code. The invention further relates to a network of scanners, interconnected via a data-communication network, and to a scannable code.

## Description

This application claims priority from the Dutch application NL 2008296 which is herein incorporated by reference.

The present invention relates to a method, system and device for verifying scannable codes. In particular, the system relates to a method for preventing abuse of codes issued.

It is known in the art to issue scannable codes on carriers, such as entrance tickets for events, or coupons or vouchers, corresponding to a certain (discount) value. It has also become common to issue these codes electronically, and have people print their own event ticket, or their own coupon, or let them bring the code on a device with a display.

There is however, a certain risk of abuse of the system. People may try to use a certain code multiple times, for example by copying or reprinting a ticket. By registering the codes that have already been used, double use of codes can be prohibited. However, when the codes can be scanned at multiple locations (for example because there are multiple entrances of a festival terrain, or because there are multiple shops where a specific ticket can be used), a quick central registration system is required, which is not always available. It is a goal of the present invention to provide a solution for the above problems, or at least a useful alternative for the state of the art.

DE 10 2007 053751 describes a system for registering and verifying tickets. However, no method for determining if there is a central database available is described in D1, and a scanning device does not determine if there are other dependent devices.

EP 0 063026 describes a scanner for use in a bus, to determine if a ticket is valid. This publication also does not describe verification of tickets scanned with other scanners.

According to the invention, a method is proposed for verifying scannable codes, comprising the steps of:
A. Issuing a plurality of scannable codes, each code corresponding with unique assets, such as an entrance, a coupon, a voucher or a discount;
B. Arranging a plurality of scanners for the codes;
C. Interconnecting the scanners by means of a data-communication-network;
D. Scanning codes, each by one of the scanners;
E. Comparing each scanned code with previously scanned codes in a database;
F. If the code is already present in the database more than a predetermined number of times, refusing the code; otherwise accepting the code.

The system according to the invention may be used in several configurations. A first one is intended for online scanning. The scanned code is sent to a server which validates the code, checks if it hasn't been used before more than a predetermined number of times (which may be one or more) and returns whether the code should be accepted or not. This predetermined number may be part of the code. The scanner then displays the result. No information about the code is retained by the scanner in this configuration. The use of a database in which all scanners can verify the codes makes sure no code can be used double. In this configuration, the network may be a wide area network such as the internet, and the server may be a webserver, which locates the database.

In an embodiment, step E may comprise determining if a central database is available in the network, and if so, synchronising the local database with the central database, and from then on, comparing the codes with a local database, coupled to the scanner. This "hybrid" scanning works the same as offline mode scanning as described above, except it will try to download a list of previously scanned codes on its start-up from the central server and it will try to send any scanned codes to the server for registration. All communication with the server is optional in this mode. If no connection (e.g. over internet) is possible the scanner will act as if in offline mode.

Even though the invention may be used with dedicated hardware based scanners, gateways running on more powerful hardware for converting the native interfaces to work with this specification will usually be necessary. According to the present invention, the scanners may be formed by a portable computer, such as a smartphone or tablet computer, equipped with a reader for scanning codes. The invention further relates to an application for a smartphone.

Since a network connection is not always available, in particular when tickets for an event need to be verified at a location outside, not having any particular (mobile) network facilities, according to the invention, step E may comprise determining if a central database is available in the network, and if so, comparing the codes with the central database, but if not, comparing the codes with a local database, coupled to the scanner. With this possibility the method may also be performed uninterruptedly in an offline mode when there is no connection with a webserver available.

In particular when there is no verification with an external database possible, it may still be desired to have a means of verifying a code upon scanning. Thereto, a data portion of the scanned code may be hashed with a configured secret and validated against a signature part of the code. If the signature does not match, a message is shown that the code is invalid. This is either because the code is for a different advertiser or campaign or because the code has been tampered with. If the code validates, a check is done against the local database if the number of times this code has been scanned does not exceed the maximum number of redemptions stored in the code. If there are still redemptions left the code is accepted by storing the code in the local database and displaying a message to the user.

The offline and hybrid modes support local network synchronization. In order to support these modes, in a further embodiment, the method comprises sending a scanned code to other scanners in the network, for saving it into their local databases. In particular, there may be a master verification device defined among the scanners.

This feature involves having all the other scanners connect to this master verification device, which may be a master scanner device. Even though the master scanner verifies all scanned codes itself, the master scanner only needs to be responsible for distribution of the scanned codes, not for validation. Validation only needs to be done to prevent possible abuse from intruders on the network. The network itself can be wired, or set up with wireless access points or smart phones in a hotspot mode.

Whenever a code is scanned, it is validated as in normal offline operations, but in addition, it is sent to the master scanner. The scanner preferably does not require a response from the master scanner and continues operations normally. The master scanner validates the code and, if it passes, stores the code in its database and subsequently distributes it to all the scanners on the network. The other scanners accept all codes from the master scanner and store them in their local database for use when validating new code scans.

In a further embodiment, each scanner is configured for determining if there is already at least one other scanner in the network, and if so, determine that at least one of the devices found is the master verification device, and if not, define itself as the master verification device.

If no master can be found on the current network, a scanner automatically assigns itself the master status. If the master scanner becomes unavailable, the first scanner in a list sent back by the master scanner automatically becomes the new master.

If a scanner connects to another scanner which is not the master itself, the scanner connected to will send a redirect message to the connecting scanner containing the IP address of the current master scanner.

The procedure for setting up a scanner may be as follows:
1. Find the master scanner
2. Connect to the master scanner
3. Validate the configured campaign
4. Receive the master scanners local time for time synchronization
5. Send all known scanned codes
6. Receive all scanned codes
7. Receive all connected scanners for reconnecting if the master fails

The first stem may be done automatically by using mDNS on supported phones, by doing a local IP range scan, or manually by the user entering the IP address of the master scanner. The master scanner advertises itself via mDNS.

Before the code scanner can be used it needs to be configured by scanning a configuration code. Such code contains a name of a client and a location for which this code is being configured, as well as the secret used for authenticating the HMAC in the code of the coupons. The code scanner asks for confirmation before (re)configuring, to prevent accidental reconfiguration.

When a master scanner has been identified, each scanned code by a scanner is sent to the master verification device. Later on, it is determined by the master verification device whether the scanned code has been used before. The code is accepted when it has not been used before.

In the following an example will be given of an optical code usable in a method according to the present invention, for instance a bar- or QR code, which can be distributed electronically, and read from a screen. The code may be made up of three parts:
- a code format
- an encoding
- a payload

There may be multiple types of code payloads: for instance campaign codes and advertiser codes.

The example code is a so called DataMatrix. The resolution is not constrained, but preferred to be 24x24 or lower. Because the code has to be read from a phone and the physical size is restrained by the display size, a higher DataMatrix resolution would make the code difficult and time consuming to read.

The data that needs to be transferred is 8-bit binary. DataMatrix has different encodings for different kinds of data. Amongst others there are encodings for binary data and an encoding for pure capital letters and numbers (C40). For efficiency reasons the latter is used in conjunction with encoding the binary data with a Base32 encoding.

The payload of the code consists of two parts: the data and the signature.

The data portion is 24 bytes long, or 192 bit. All values are encoded big endian. The following fields are defined:
- User ID: A 64-bit unsigned integer identifying the user
- Maximum redemptions: A 64-bit unsigned integer defining the maximum number of times this individual coupon can be redeemed
- Campaign ID: A 64-bit unsigned integer identifying the campaign (only for advertiser codes)

The signature is a 16-byte, or 128 bit, MD5 HMAC. Only the 24 bytes of data are considered the message. The secret is, depending on the code type, either the campaign secret or the advertiser secret. Both are a randomly generated string of 64 bytes. The advertiser code can be used by scanners in retail where the scanners need to be able to accept different specials without reconfiguration. The campaign secrets can be used for events or sensitive campaigns (such as tickets) where the amount of time the secret is used can increase the chances of the secret leaking out.

## Claims

1. Method for verifying scannable codes, comprising:
A. Issuing a plurality of scannable codes, each code corresponding with unique assets, such as an entrance, a coupon, a voucher or a discount;
B. Arranging a plurality of scanners for the codes;
C. Interconnecting the scanners by means of a data-communication-network;
D. Scanning codes, each by one of the scanners;
E. Comparing each scanned code with previously scanned codes in a database;
F. If the code is already present in the database more than a predetermined number of times, refusing the code; otherwise accepting the code,
wherein step E comprises:
- determining if a central database is available in the network,
if so,
comparing the codes with the central database; and
if not,
comparing the codes with a local database, coupled to the scanner.

2. Method according to claim 1, wherein step E comprises:
- determining if a central database is available in the network,
if so,
synchronising the local database with the central database; and
from then on, comparing the codes with a local database, coupled to the scanner.

3. Method according to claim 1 or 2, wherein the network is a wide area network such as the internet, and the database is located at a webserver.

4. Method according to any of the preceding claims, wherein at least one of the scanners is a portable computer, such as a smartphone or tablet computer.

5. Method according to any of the preceding claims, comprising sending a scanned code to other scanners in the network, for saving it into their local databases.

6. Method according to claim 5, comprising defining a master verification device.

7. Method according to any of the preceding claims, wherein each scanner is configured for determining if there is already at least one other scanner in the network, and if so, determine that at least one of the devices found is the master verification device, and if not, define itself as the master verification device.

8. Method according to claim 6 or 7, comprising sending each scanned code by a scanner to the master verification device;
- determining by the master verification device whether the scanned code has been used before more than a predetermined number of times;
- updating a database record for the scanned code by the master scanner device;
- accepting a code by the scanner when it has not been used before more than a predetermined number of times.

9. Method according to claim 8, wherein the network is an isolated local area network, and the master verification device is one of the scanners.

10. Method according to any of the preceding claims, wherein the code is an optical code, such as a bar- or QR code.

11. Method according to any of the preceding claims, wherein the code is distributed electronically, and read from a screen.

12. Method according to any of the preceding claims, wherein the code comprises a validation string, and/or a number of times it may be used.

13. Network of scanners, interconnected via a data-communication network, and configured for performing the method according to any of the preceding claims.

14. Scannable code, apparently intended for use in a method according to any of the preceding claims 1-13.
